(19) Europäisches Patentamt
European Patent Office
Office européen des brevets

(11) **EP 1 463 041 A2**

(12) **EUROPEAN PATENT APPLICATION**

(43) Date of publication:
**29.09.2004 Bulletin 2004/40**

(51) Int Cl.$^7$: **G11B 7/007**

(21) Application number: **04003395.3**

(22) Date of filing: **16.02.2004**

| (84) Designated Contracting States:<br>**AT BE BG CH CY CZ DE DK EE ES FI FR GB GR HU IE IT LI LU MC NL PT RO SE SI SK TR**<br>Designated Extension States:<br>**AL LT LV MK** | (72) Inventors:<br>• **Nagai, Yuji c/o Toshiba Corporation**<br>  **Minatu-ku Tokyo 105-8001 (JP)**<br>• **Ogawa, Akihito c/o Toshiba Corporation**<br>  **Minato-ku Tokyo 105-8001 (JP)**<br>• **Noda, Chosaku c/o Toshiba Corporation**<br>  **Minato-ku Tokyo 105-8001 (JP)** |
| (30) Priority: **27.03.2003 JP 2003087647** | |
| (71) Applicant: **Kabushiki Kaisha Toshiba**<br>**Tokyo (JP)** | (74) Representative: **Henkel, Feiler & Hänzel**<br>**Möhlstrasse 37**<br>**81675 München (DE)** |

(54) **Recorded information evaluation method and device and information recording medium therefor**

(57)    From an optical disc on which physical address information is recorded in the form of phase modulation of a groove wobble, a wobble signal is optically obtained which is affected by the groove wobble. The wobble signal is phase detected by a phase detector (32) and then fed into a low-pass filter (34). In a jitter calculator (51) the value of σ/T is calculated from the standard deviation σ of a jitter distribution obtained from the output of the low-pass filter and the period (T) of a symbol clock for the phase modulation to evaluate the recorded physical address information.

FIG. 15

**Description**

This invention relates to a method and device for evaluating recording mediums and an information recording medium therefor. The invention is useful in evaluating information recorded on optical discs such as digital versatile discs (DVDs).

As is well known, optical discs that have a capacity of 4.7 GB for a single layer on one side and allow high-density recording of information have been put into practical use in recent years. Such optical discs include DVD-ROMs, which are playback-only optical discs, and DVD-RAMs, DVD-RWs and DVD+RWs which are rewritable optical discs.

With these optical discs, recording and reproduction of information is carried out by focusing laser light onto an information recording layer formed on a transparent plate. The information recording layer of the optical disk has a guide groove. The recording or reproduction of information is performed along the guide groove. To identify spatial locations where information is recorded or reproduced, physical addresses are formed.

With the DVD-RAM, the physical addresses are formed by projections and recesses which are referred to as prepits. With the DVD+RW, on the other hand, groove wobble modulation (hereinafter referred to as wobble modulation) is utilized which minutely undulates the guide groove in the direction of radius of the disc. The physical address formation.method based on the wobble modulation has advantages that, since the recording track is not disconnected, the user information recording area is wide, in other words, the format efficiency is high, and the compatibility with playback-only media is achieved with ease.

For example, with the DVD+RW format in standard ECMA-337, the physical addresses are formed through wobble phase modulation. With this format, NBSNR (Narrow Band Signal to Noise Ratio) is used as an index of evaluation of a wobble signal. The NBSNR means the signal to noise ratio in the frequency band of the wobble signal. The greater the NBSBR, the better the signal quality. In the DVD+RW format, the NBSNR of the wobble signal is defined to be 45 dB or more under the circumstance that a measurement track is recorded with no signal and to be 38 dB or more under the circumstance that the measurement track is recorded with a signal. The details concerning the contents of physical addresses are described in standard ECMA-337.

With the conventional technique, however, although it is possible to measure the quality of the wobble signal itself (unmodulated wobble signal), it is impossible to know whether the phase modulation is performed correctly. That the phase modulation is not performed correctly means that the addresses cannot be read correctly. This offers a serious problem in recording or reproducing information on or from an optical disc.

One method of measuring how correctly address information can be read is to measure the error rate of address bits. However, in order to measure the address bit error rate, it is required to compare read address information with correct address information. To prepare correct address information, it is required to know which part of an optical disc is now being read from using some means; however, this is very difficult.

It is therefore an object of the present invention to provide an evaluation method and device which is high in evaluation performance and reliability, and an information recording medium related to the method. In brief, we directed our attention with the fact that the phase-detected output of a wobble signal has a correlation with the address error rate.

According to an aspect of the present invention, a wobble signal is optically obtained from an optical disc on which physical address information is recorded in the form of phase modulation of a groove wobble. The wobble signal is affected by the groove wobble. The wobble signal is phase detected and the resulting phase-detected output waveform is then fed into a low-pass filter. The value of $\sigma/T$ is calculated from the standard deviation $\sigma$ of a jitter distribution obtained from the output of the low-pass filter and the period T of a symbol clock for the phase modulation to evaluate the recorded physical address information.

According to another aspect of the present invention, an estimated error rate is calculated from the standard deviation $\sigma$ and the mean $\mu$ of a distribution of amplitude absolute values obtained from the output of the low-pass filter to thereby evaluate the reliability of the recorded physical address information.

This summary of the invention does not necessarily describe all necessary features so that the invention may also be a sub-combination of these described features.

The invention can be more fully understood from the following detailed description when taken in conjunction with the accompanying drawings, in which:

FIG. 1 shows an example of an arrangement of an optical disc device;
FIG. 2 shows the arrangement of the photodetector unit of FIG. 1;
FIG. 3 is a schematic plan view of an optical disc according to the invention;
FIGS. 4A and 4B are partially enlarged perspective views of the optical disc of FIG. 3 illustrating different recording methods;
FIG. 5 schematically shows the wobbled groove and land tracks of the optical disk of FIG. 3;
FIGS. 6A and 6B show the sum output signal and the difference output signal, respectively, of the photodetector of FIG. 1 when the wobbled tracks of FIG. 5 are scanned;

FIG. 7 shows an example of a wobble modulated signal based on frequency modulation;

FIG. 8 shows an example of a wobble modulated signal based on phase modulation;

FIG. 9 is a diagram for use in explanation of a method of setting up physical addresses of segments of an optical disc;

FIG. 10 shows an example of a physical address format of an optical disc;

FIG. 11 is a block diagram of a demodulation circuit that adopts an evaluation method according to the present invention;

FIGS. 12A to 12D are waveform diagrams for use in explanation of the operation of the circuit of FIG. 11;

FIGS. 13A to 13D are waveform diagrams for use in explanation of the operation of the circuit of FIG. 11;

FIG. 14 is a block diagram of a demodulation circuit that adopts another evaluation method according to the present invention;

FIG. 15 is a block diagram of a demodulation circuit that adopts still another evaluation method according to the present invention;

FIGS. 16A to 16D are waveform diagrams for use in explanation of the operation of the circuit of FIG. 15;

FIGS. 17A to 17C are waveform diagrams for use in explanation of the operation of the circuit of FIG. 15;

FIGS. 18A and 18B show distributions of $\Delta T$ for use in explanation of the operation of the circuit of FIG. 15;

FIG. 19 is a block diagram of a demodulation circuit that adopts a further evaluation method according to the present invention;

FIG. 20 shows distributions of $\Delta T$ when the effects of the sync signal and the address information appear as jitter components;

FIG. 21 shows a jitter versus address detection error rate relationship measured when the circuit of FIG. 18 and evaluation method of the invention are used;

FIG. 22 is a block diagram of a demodulation circuit that adopts another evaluation method according to the present invention;

FIGS. 23A to 23C are waveform diagrams for use in explanation of the operation of the circuit of FIG. 22;

FIGS. 24A and 24B show amplitude distributions for use in explanation of the operation of the circuit of FIG. 22;

FIGS. 25A and 25B show amplitude 'distributions for use in explanation of the operation of the circuit of FIG. 22;

FIG. 26 shows an example of an address error rate map;

FIG. 27 is a block diagram of a demodulation circuit that adopts still another evaluation method according to the present invention;

FIGS. 28A to 28C are waveform diagrams for use in explanation of the operation of the circuit of FIG. 27; and

FIG. 29 is a block diagram of a demodulation circuit that adopts another evaluation method according to the present invention.

The preferred embodiments of the present invention will be described hereinafter with reference to the accompanying drawings.

[Basic Explanation of Optical Disc Device]

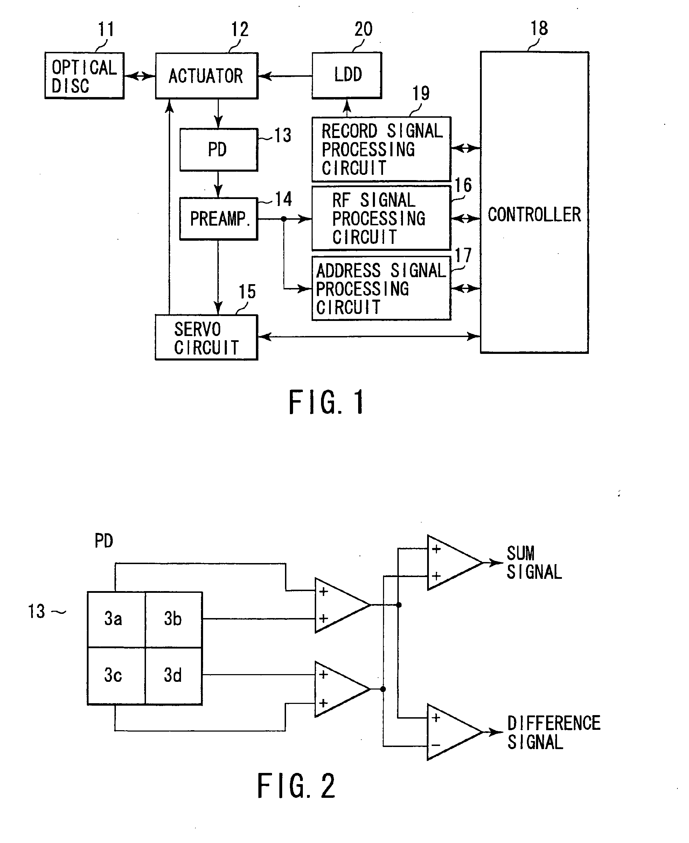

An optical disc device of the present invention performs recording or reproduction of information by focusing laser light emitted from a pickup head (PUH) 12 onto the information recording layer of an optical disc 11. In FIG. 1 there is illustrated an arrangement of the optical disc device. Light reflected from the disc 11 passes through the optical system of the PUH 12 and enters a photodetector (PD) unit 13 where it is detected as an electrical signal.

The PD 13 is split into two or more sections. A signal which is produced by adding voltage values output from the respective sections is called a sum signal. A signal which is generated from the difference between the voltage values is called a difference signal. In particular, a signal which is added with a radio-frequency signal, such as user information, is called an RF signal. A signal which is generated by performing subtraction processing on the outputs of the detector sections optically located in a radial direction relative to the optical disc 11 is called a radial push-pull signal.

FIG. 2 shows an example of a four-quadrant PD unit in which the PD 13 is split into four sections 3a to 3d. The sum signal is produced by adding the output signals of all the sections 3a to 3d. The difference signal is produced by adding the output signals of each pair of detector sections (3a and 3b; 3c and 3d) to generate two sum signals and then subtracting one of the two sum signals from the other.

The detected electrical signal is amplified in a preamplifier 14 and then output to a servo circuit 15, an RF signal processing circuit 16, and an address signal processing circuit 17.

The address signal processing circuit 17 performs processing on the detected signal to read physical address information indicating recording locations on the optical disc 11 and then sends the read address information to the controller 18. Based on the address information, the controller 18 reads information, such as user information, recorded in desired locations on the optical disc or writes information, such as user information, in desired locations.

In the recording mode, a signal to be recorded is output from a record signal processing circuit 19 to a laser diode driver (LDD) 20 under the control of the controller 18. Thereby, laser light from the PUP 12 is modulated and information is recorded onto recording tracks of the optical disc 11.

[Explanation of Optical Disc and Land and Groove Recording]

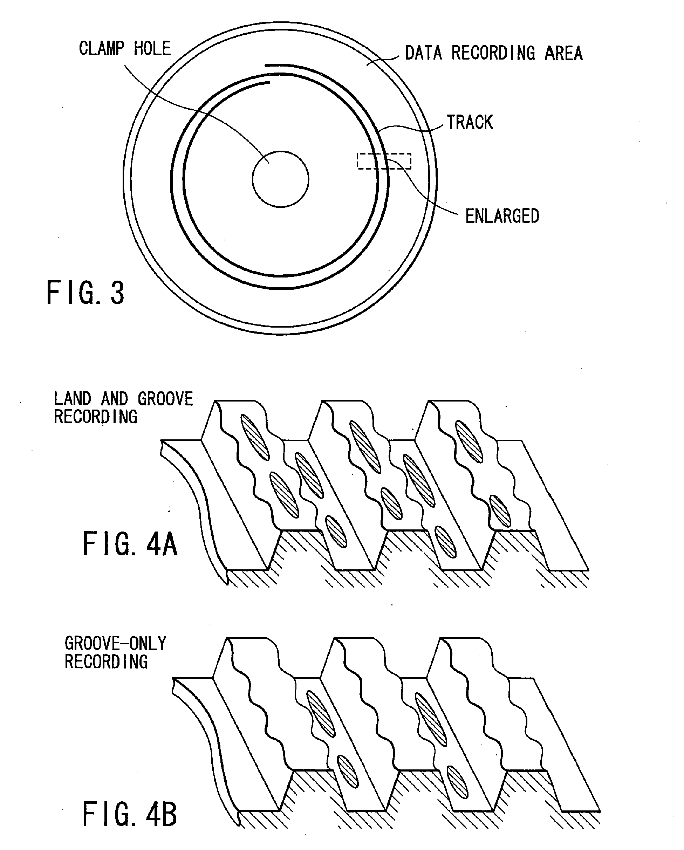

The optical disk 11 of the present invention has a guide groove formed in the information recording area of an information recording layer formed on a transparent plate. Projections and recesses resulting from the formation of the guide groove are called tracks. Recording or reproduction of information is carried out along these tracks. The track configuration exists in two forms; spiral and concentric. In the spiral configuration, the track is formed to spiral from the inside of the disc to the outside as shown in FIG. 3. In the concentric configuration, the track is formed in the form of concentric circles.

In FIGS. 4A and 4B the track is shown enlarged. The track is formed of projections and recesses in the information recording layer. The projections are called lands, whereas the recesses are called grooves. In the DVD-RAM, information is recorded in the form of recorded marks on both the lands and the grooves as shown in FIG. 4A. In the DVD+RW and so on, information is recorded only on the grooves as shown in FIG. 4B.

[Explanation of Wobble Signal-to-Push-Pull Relationship]

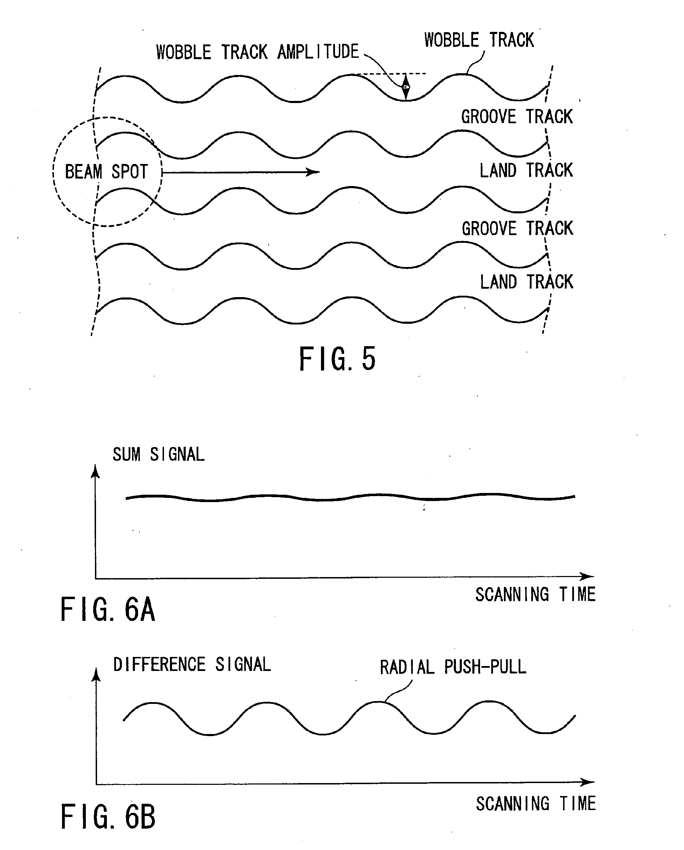

FIG. 5 shows a top view of the track. The track of the optical disc of the present invention is formed to meander slightly in the direction of radius of the disc. Such a track is referred to as a wobble track. When a focused beam spot is scanned along the wobble track, it virtually moves straight in the center of the track because the wobble frequency is higher compared with a tracking servo signal. At this time, the sum signal varies very little, but only the difference signal in the radial direction, i.e., the radial push-pull signal varies in accordance with the wobble. This is called a wobble signal. The wobble signal is used to adjust the rotational frequency of the spindle, and as reference for the recording clock and physical address information. FIGS. 6A and 6B show the waveforms of the sum signal and the difference signal (radial push-pull signal), respectively.

[Explanation of Wobble Signal]

With the optical disc to which the present invention is applied, physical address information indicating physical locations on the information recording area of the optical disc is recorded by modulating the wobble signal.

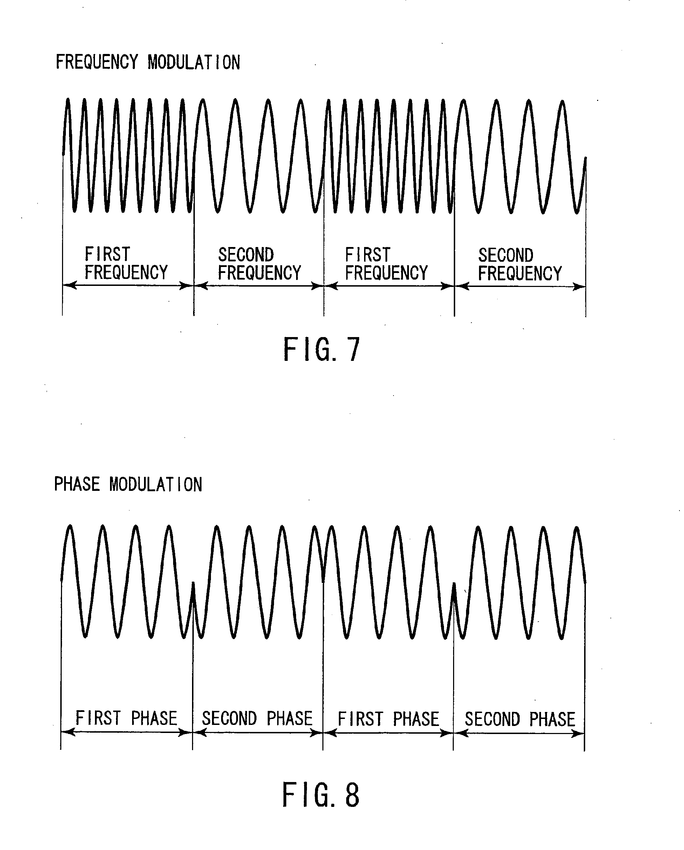

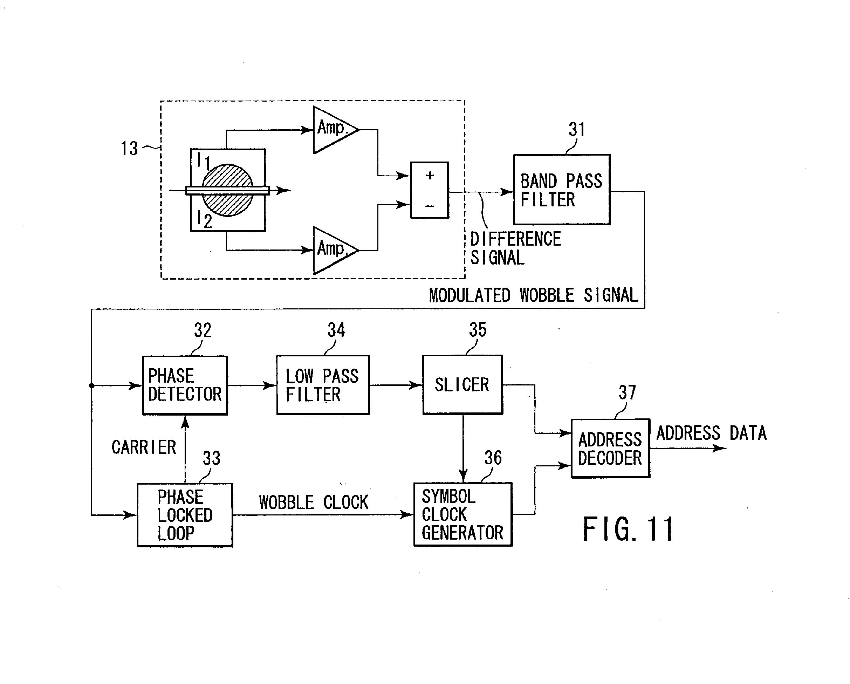

That is, the physical address information is recorded by subjecting the wobble to be imparted to the track to frequency modulation as shown in FIG. 7 or phase modulation as shown in FIG. 8. In the example of FIG. 7, a first frequency (for example, it is set to "0") and a second frequency (for example, it is set to "1") are combined to provide information having significance. In the example of FIG. 8, a first phase (for example, it is set to "0") and a second phase (for example, it is set to "1") are combined to provide significant information. The recorded physical address information can be read through the use of such a demodulation circuit as shown in FIG. 11. This demodulation circuit will be described in detail later.

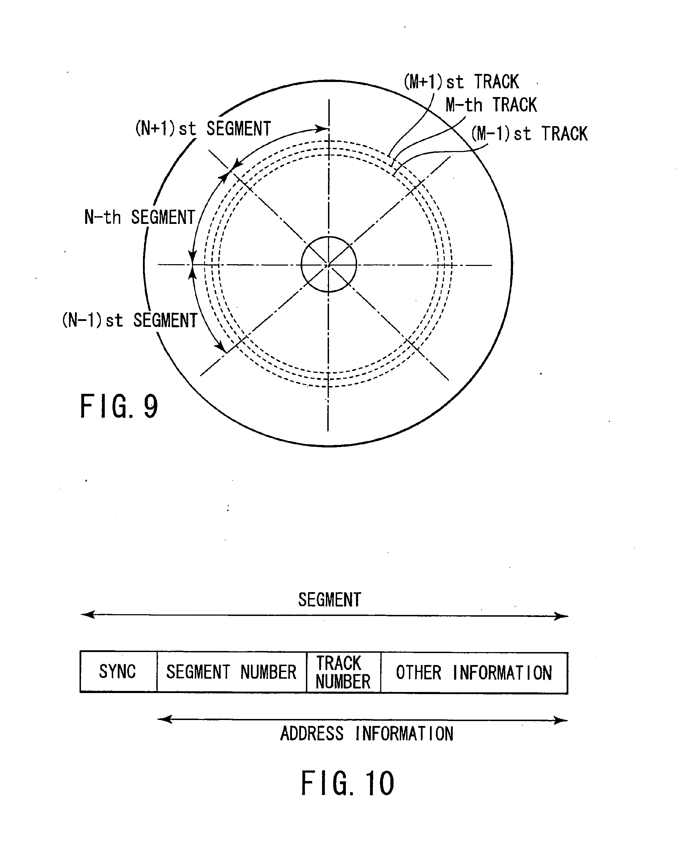

FIG. 9 shows the configuration of the information recording area of the optical disc 11. As shown, track numbers and segment numbers are used to identify physical locations in the information recording area of the optical disc. Each of the tracks is numbered in sequence to identify locations in the radial direction. Further, each track is split into a number of segments and each segment is numbered in sequence to identify locations in the tangential direction.

At this point, address information that is location information can be recorded once or plural by modulating the wobble within one segment. The makeup of address information produced by the wobble modulation is as depicted in FIG. 10. In recovering each address information, a sync signal is required to indicate the start of the address information. The sync signal in FIG. 10 is used for timing generation in recovering address information.

[Explanation of Phase Recovery Method]

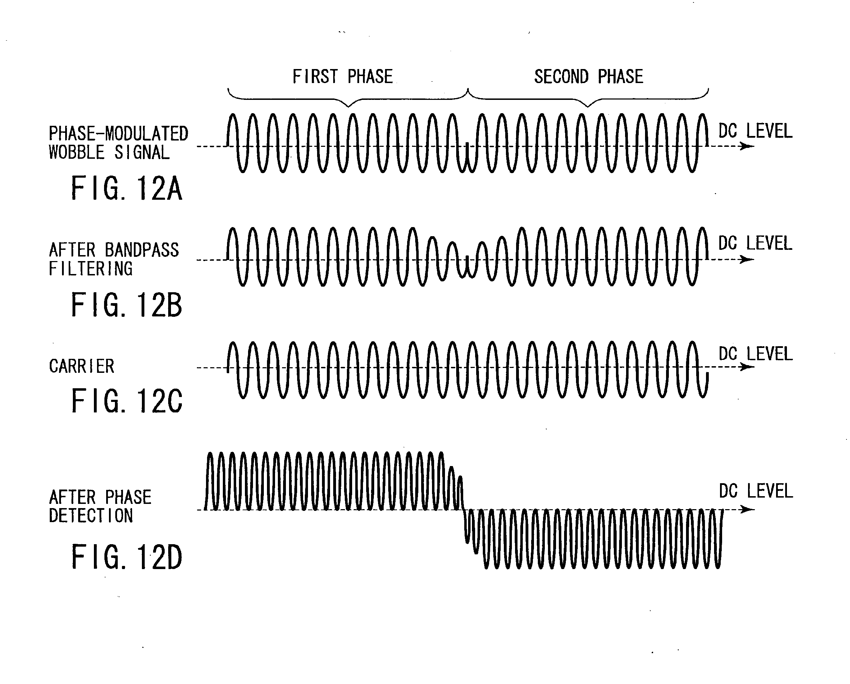

FIG. 11 shows an example of a demodulation circuit for recovering address information from a phase-modulated wobble signal. The wobble signal contains noise inherent in each medium, noise resulting from crosstalk from adjacent tracks, etc. For this reason, the difference signal from the photodetector unit 13 is applied to a bandpass filter (BPF) 31 where noise components outside the frequency band of the wobble signal are removed. At this point, since the frequency of the waveform at a point of change in phase differs from the frequency of the wobble signal, the bandpass filtering results in a reduction in amplitude at the point of change in phase. FIG. 12A shows the phase-modulated wobble signal taken from the photodetector unit 13, while FIG. 12B shows the wobble signal after bandpass filtering. As can be seen from FIG. 12B, a reduction in amplitude is made in the vicinity of the boundary between the first and second phases.

The wobble signal having noise removed is applied to a phase detector 32 and at the same time to a phase-locked loop (PLL) circuit 33 to produce a carrier signal. In the phase-locked loop circuit 33, the phase locking function is performed to produce a carrier signal that is locked to the wobble signal, which is shown in FIG. 12C. In the phase detector 32, phase detection is performed on the basis of the wobble signal and the carrier locked to it. A typical method of phase detection is to discriminate between phases through multiplication of a modulated signal and a carrier signal.

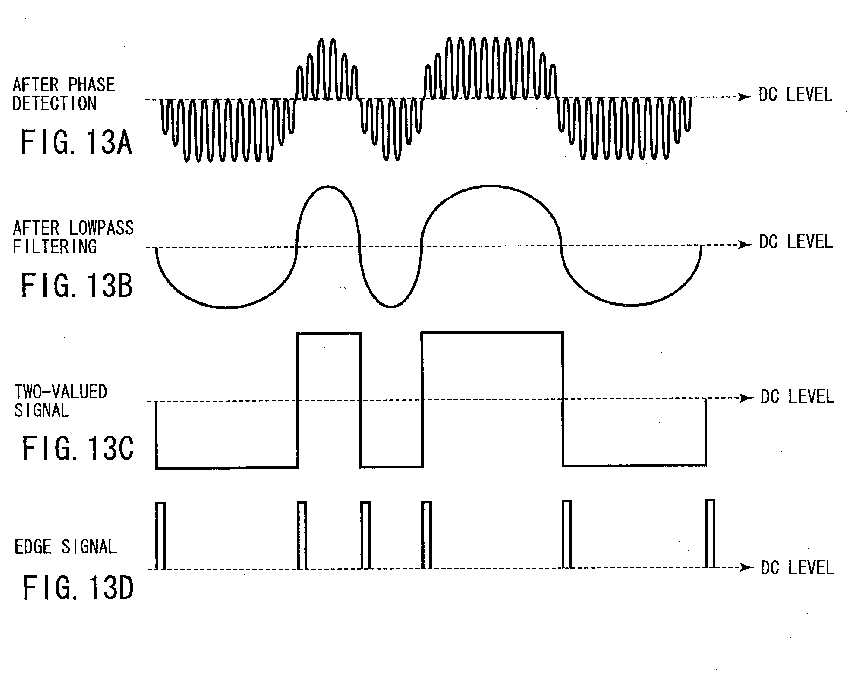

The waveform after multiplication is detected in the offset form for the first and the second phase as shown in FIG. 12D. High-frequency components resulting from the phase detection are removed by using a low-pass filter (LPF) 34. The waveform after low-pass filtering is two-valued by a slicer 35 with two thresholds. FIG. 13A shows the output waveform of the phase detector 32. FIG. 13B shows the output waveform of the low-pass filter 34 in which the high-frequency components of the output of the phase detector 32 has been removed. FIG. 13C shows the output waveform of the slicer 35 in which the output of the low-pass filter 34 has been two-valued.

To obtain address bit information from the two-valued waveform, a clock (hereinafter referred to as a symbol clock) is required which is synchronized with address bits. The symbol clock is generated by a symbol clock generator 36 using a wobble clock synchronized with the wobble period and output from the phase-locked loop circuit 33 and the two-valued signal output from the slicer 35.

In the symbol clock generator 36, processing is performed so that a waveform resulting from frequency division of the wobble clock by N is synchronized with the two-valued signal. N is the number of wobble waves used to represent one address bit. For example, when one address bit is made up of four wobble waves, the two-valued signal has its polarity switched every predetermined number of wobble waves corresponding to a multiple of four. The shortest modulation period in this case is four wobbles. That is, setting N to four allows a clock synchronized with address bits to be generated. The edges of the two-valued signal are detected as shown in FIG. 13D. Counting every four successive wobble clock pulses with reference to each of the detected edges results in bit-synchronized pulses.

The divided-by-N wobble clock synchronized with the two-valued signal is fed into an address decoder 37 as the symbol clock. The address decoder 37 recovers address information using the two-valued signal from the slicer 35 and the symbol clock from the symbol clock generator 36.

As shown in FIG. 10, however, the wobble is generally modulated to contain not only physical address information but also a sync signal that locates the beginning of the address information. The sync signal is modulated with a modulation period different from that for address bits in order to prevent the sync signal from being recognized as address information by mistake. In this case, the symbol clock is required to be generated with the minimum modulation period including the sync signal. However, when the sync signal is detected in a manner different from that for address bits (for example, detection in units of one wobble wave), the symbol clock is simply made to conform to the shortest modulation period of the address bits.

A method will be described hereinafter which evaluates the reliability of address information recorded on an optical disk on the basis of wobble modulation.

[Explanation of Phase-Modulated Wobble Signal Evaluation Method: (1) Measurement of Address Detection Error Rate]

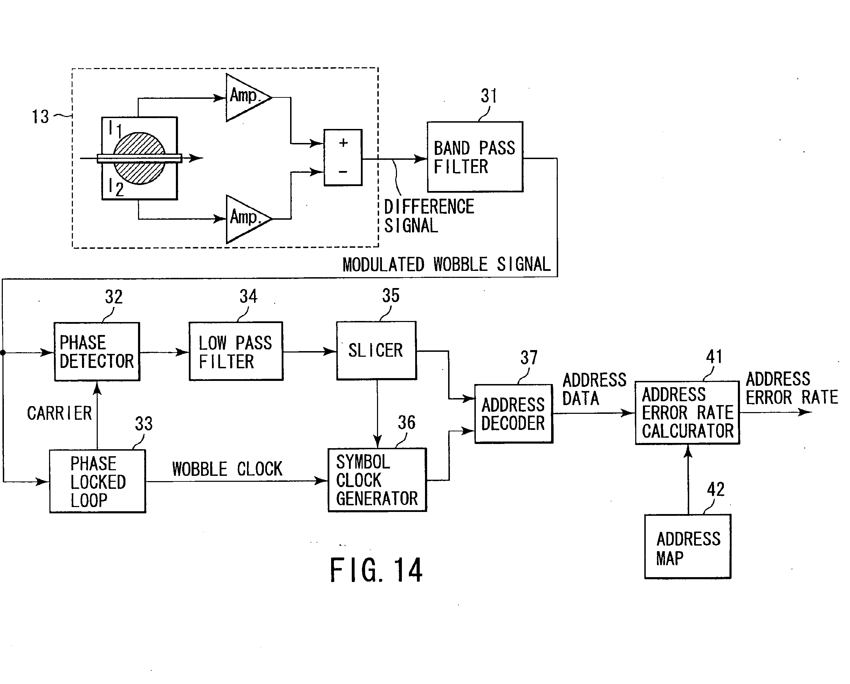

In FIG. 14 is illustrated a method of measuring the address detection error rate in the phase demodulation method described above. The demodulation circuit remains unchanged from that shown in FIG. 11 and hence each component is denoted by a like reference numeral. The address data obtained by the preceding demodulation circuit is fed into a succeeding address error rate calculator 41, which performs synchronization processing on an address map from a previously prepared memory 42 and the input data and then calculates the address error rate.

The address information is generally recorded consecutively in the direction in which the disk is played back. Thus, to decide address information at a certain time, the address information before and after that time can be utilized. For this reason, the detection of address information is allowed even if the detection error rate gets slightly worse than that for user information recorded in the form of marks and spaces. Although an error correction circuit is normally used in recovering user information, it is little used in recovering address information. The reason is that, with optical discs, address information that is currently being read from a disk is needed immediately for recording or reproduction and hence delays involved in error correction cannot be allowed.

In view of the foregoing, to ensure reliability, it is desirable that the address error rate be less than 1E-3 (1 error per $10^3$ addresses). It is also expected to reduce the seek time in order to increase the recording or reproduction speed. In such a case, it will be required to detect address information without depending upon the consecutive recording of address information and to further increase the reliability. In this case, it is desirable that the address error rate be less than 1E-4 (1 error per $10^4$ addresses).

[Explanation of Phase-Modulated Wobble Signal Evaluation Method: (2) Measurement of Jitter]

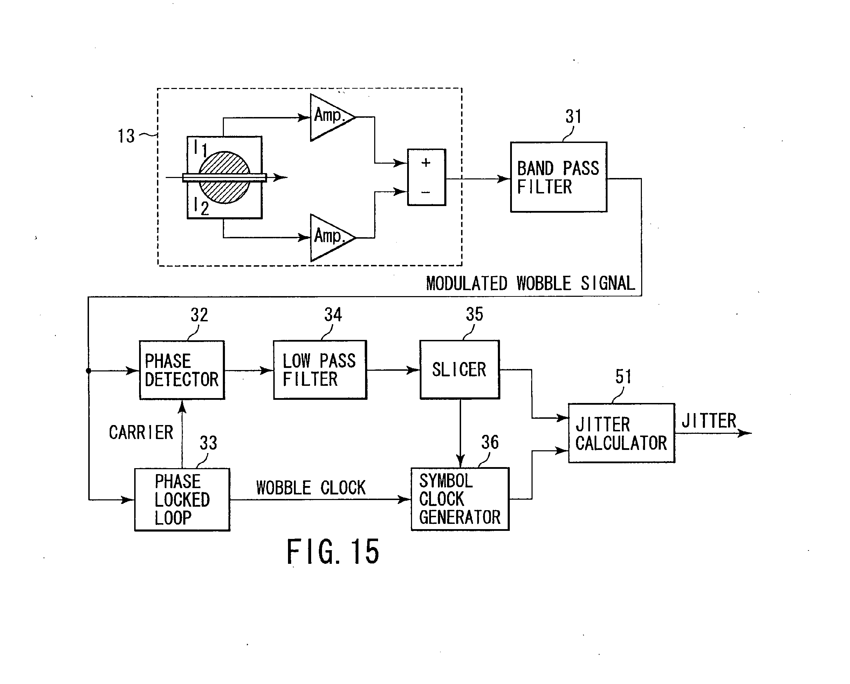

In FIG. 15 is illustrated a method of measuring jitter from a two-valued waveform after phase detection in the phase demodulation method described above. The demodulation circuit remains unchanged from that shown in FIG. 11 and hence each component is denoted by a like reference numeral. The output of the phase detector 32 has its high-frequency component sufficiently decayed by the succeeding low-pass filter (LPF) 34 and is then two-valued. The two-valued signal contains address bit information. By using the two-valued signal and the symbol clock synchronized with the address bits, therefore, jitter correlated with the address detection error rate can be calculated. This processing is performed by a jitter calculation unit 51.

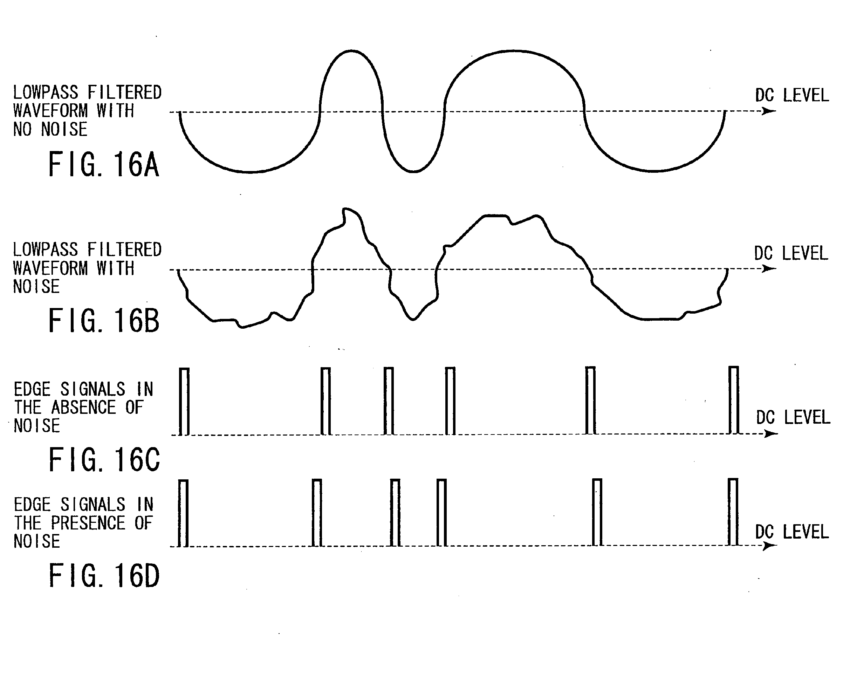

FIGS. 16A and 16B show the output waveforms of the low-pass filter (LPF) 34 after phase detection of a wobble signal with no noise and a wobble signal containing noise, respectively. When the wobble signal contains noise, the phase information-containing a signal resulting from phase detection also contains noise. This noise adversely affects address decoding. FIGS. 16C and 16D show signals corresponding to the rising and falling edges of two-valued versions of the signals of FIGS. 16A and 16B, respectively. When the LPF output waveform contains no noise, the rising- and falling-edge signals correctly rise in synchronization with the address bits. When the LPF output waveform contains noise, however, the timing of each of the rising- and falling-edge signals displaces from the correct timing. As the noise increases in magnitude, the timing displacement increases, causing errors in address detection.

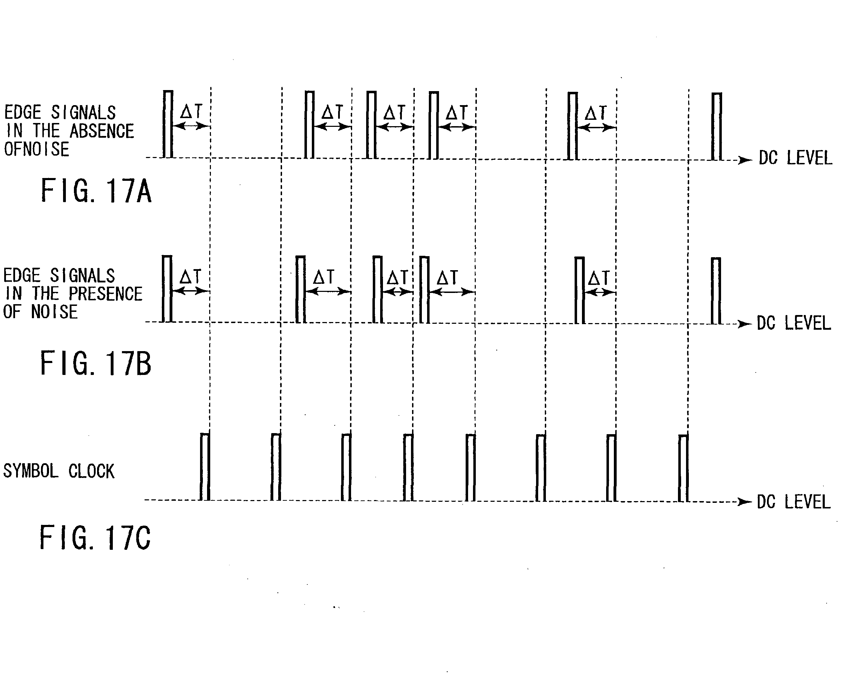

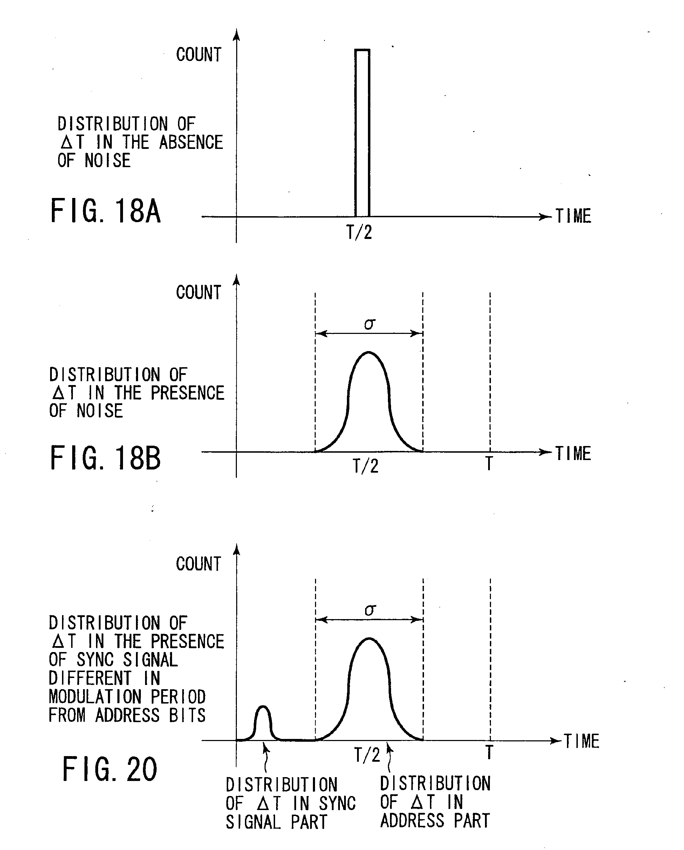

FIG. 17A shows edge signals when no noise is contained and FIG. 17B shows edge signals when noise is contained. FIG. 17B shows the occurrence of jitter. In the absence of noise, the time $\Delta T$ between each of the rising- and falling-edge signals and the corresponding system clock (FIG. 17C) is constant. In the presence of noise, however, $\Delta T$ is subject to variations. FIGS. 18A and 18B show the distributions of $\Delta T$ in the absence and presence of noise, respectively. In the absence of noise, the distribution of $\Delta T$ is concentrated at the position of T/2 as shown in FIG. 18A. In the presence of noise, however, the distribution of $\Delta T$ will have some standard deviation $\sigma$ due to variations in $\Delta T$ as shown in FIG. 18B. The value, $\sigma/T$, obtained by normalizing the standard deviation $\sigma$ by the time T per symbol (the average of time intervals between symbol clock pulses) can be used an index value for jitter. When $\sigma$ is evaluated small, the optical disc may be decided to be good. When $\sigma$ is large, the optical disc may be decided to be improper.

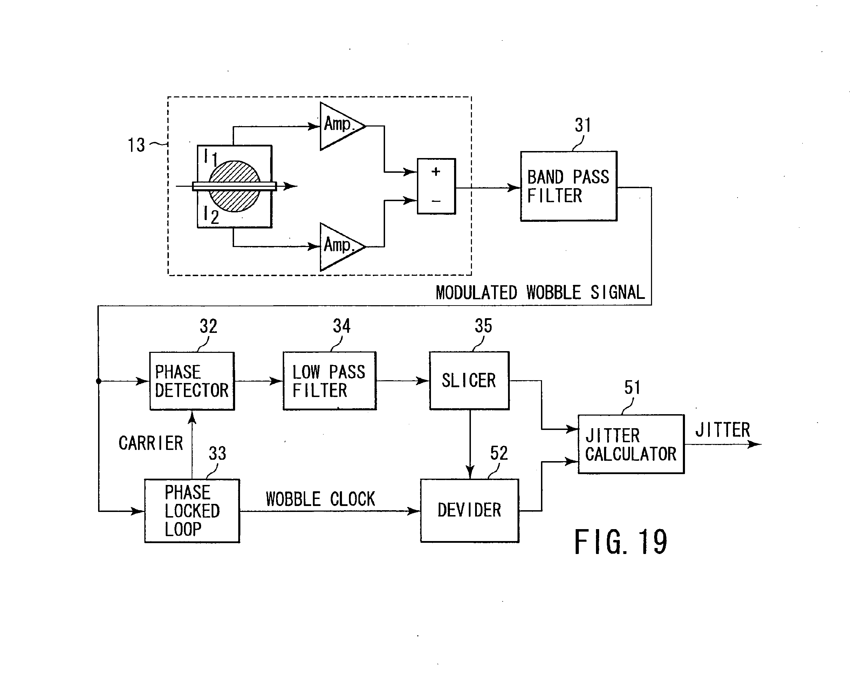

The jitter measurement system may be modified as shown in FIG. 19. Although the symbol clock generator 36 is used in the configuration of FIG. 15, a simple frequency divider 52 is used instead in the configuration of FIG. 19. That is, the frequency divider 52 divides the frequency of the wobble clock and applies the frequency-divided wobble clock to the jitter calculator 51. Assuming that one symbol is represented by four wobble waves, the frequency of the wobble clock is simply divided by four in the frequency divider 52. To measure $\sigma/T$, the output of the frequency divider is simply delayed in the jitter calculator 51 so that jitter becomes the best.

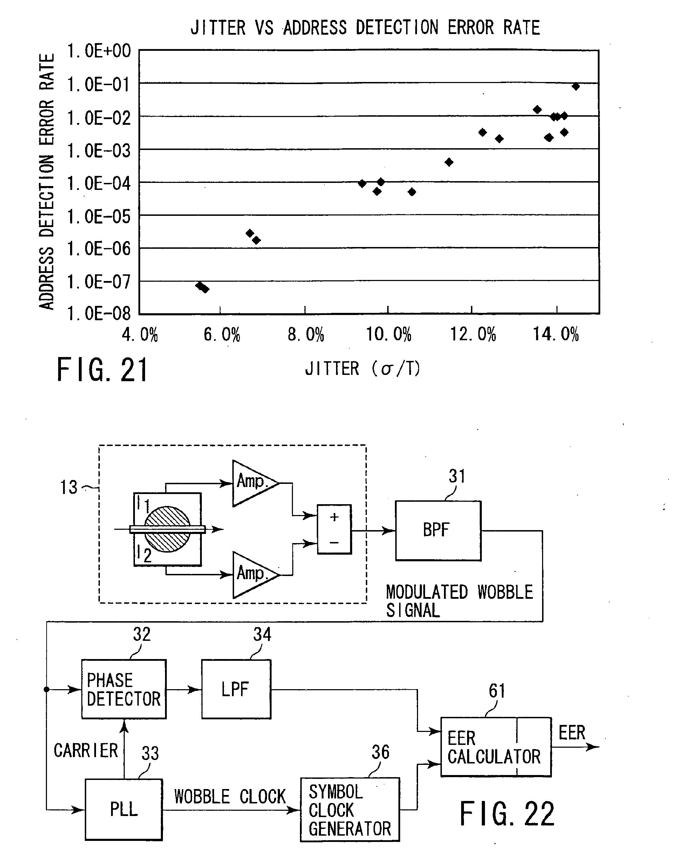

As described previously, the wobble signal normally contains a sync signal modulated with a period different from that with which address bits are modulated. In this case, the average value of $\Delta T$ varies between the address part and the sync part. For this reason, the distribution of $\Delta T$ is divided into two. That is, the distribution of $\Delta T$ in the address part and the distribution of $\Delta T$ in the sync part will appear as shown in FIG. 20. In this case, it is desirable to calculate the $\sigma$ value from only the distribution in the address part. This can be achieved easily in the jitter calculator 51.

FIG. 21 shows a correlation between the jitter and the address detection error rate. From the figure it can be seen that there is substantially a one-to-one correlation between the jitter and the address detection error rate. As described previously, it is practically desirable that the address detection error rate be less than 1.0E-03 (a rate of $10^{-3}$: one error per $10^3$ addresses). As can be seen from FIG. 21 it is desirable that the jitter be less than 12%. When the continuity between addresses is not utilized, it is desirable that jitter be less than 10% because the address detection error rate is required to be less than 1.0E-04. Moreover, as can be seen from FIG. 21 there are some variations in the correlation between the jitter and the address detection error rate. In view of the variations, it is desirable that the jitter be less than 11% in the case of the detection system that utilizes the address continuity and less than 9% in the detection system that does not utilize the address continuity.

[Explanation of Phase-Modulated Wobble Signal Evaluation Method: (3) Measurement of Estimated Error Rate]

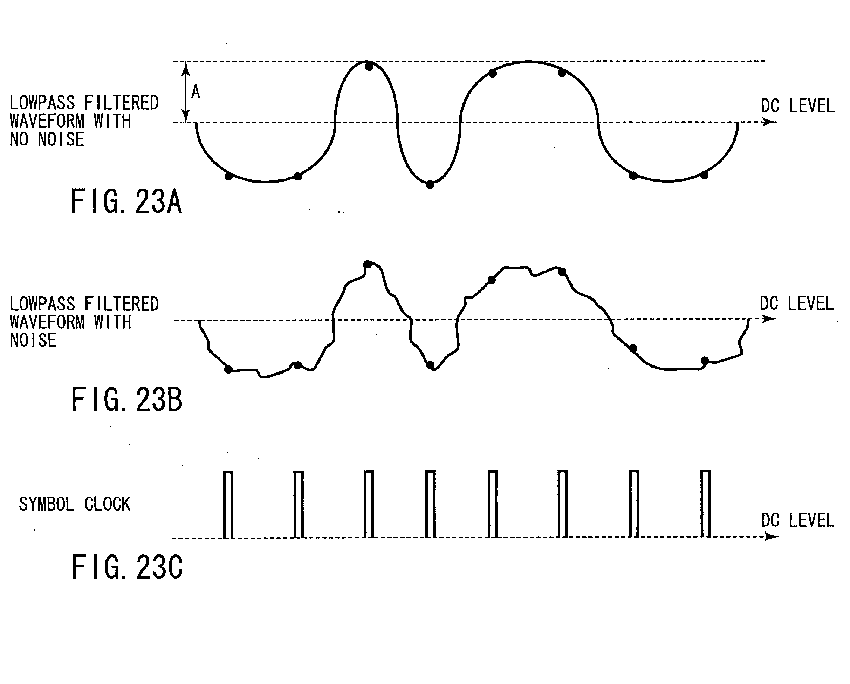

In FIG. 22 is illustrated a method of evaluation based on the amplitude of the low-pass filter output after phase detection in the phase demodulation method described above. The demodulation circuit remains unchanged from that shown in FIG. 11 and hence each component is denoted by a like reference numeral. The output of the phase detector 32 has its high-frequency component sufficiently decayed by the succeeding low-pass filter (LPF) 34 and is then input to an estimated error rate calculator 61 to which the symbol clock is simultaneously input. The symbol clock is used in sampling the amplitude values of the waveform after low-pass filtering. This operation is described with reference to FIG. 23. In the estimated error rate calculator 61, the amplitude values of the low-pass filter output waveform at the times when the symbol clock rises are sampled. In the absence of noise (FIG. 23A), the absolute values of the sampled amplitude values are substantially constant. In the presence of noise (FIG. 23B), however, the absolute values of the sampled amplitude values have some variance.

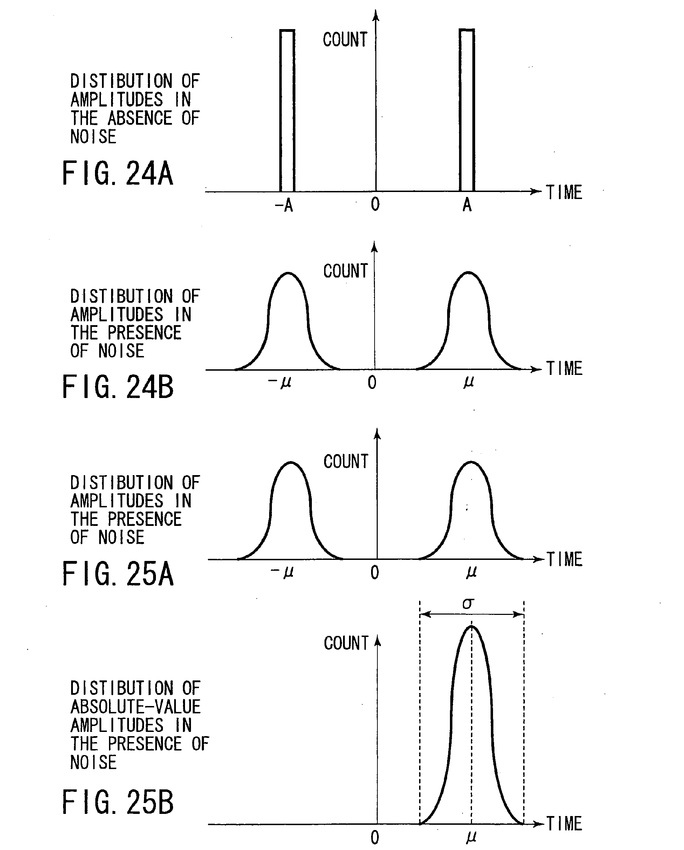

FIG. 24A shows ideal amplitude distributions in the absence of noise, while FIG. 24B shows amplitude distributions in the presence of noise. As noise increases in magnitude, the variance of the amplitude distributions spreads. As a result, two distributions which should essentially be separated from each other with their central value (0 in the drawing) as the boundary will come to overlap each other. This results in the occurrence of errors in address detection. Thus, the ratio between the variance and the mean of a distribution and the address detection error rate correlate with each other.

A distribution on the left-hand side of FIG. 25A can be superimposed upon a distribution on the righthand side as shown in FIG. 25B by representing amplitudes in terms of absolute values. By making use of the standard deviation $\sigma$ and the mean $\mu$ of this distribution, the address detection error rate can be estimated. A distribution of amplitude absolute values virtually forms a Gaussian distribution. For this reason, by using an error function represented in terms of a Gaussian probability density function, the estimated error rate can be obtained as follows:

$$\text{EER} (\sigma, \mu) = \int_{-\infty}^{0} \frac{\exp\left\{-(x-\mu)^2 / 2\sigma^2\right\}}{\sigma\sqrt{2\pi}} \, dx$$

The EER (Estimated Error Rate) and the address detection error rate show a one-to-one correlation. It is therefore desirable that EER be less than 1E-3. When the continuity between addresses is not utilized, it is desirable that EER be less than 1.0E-04 because the address detection error rate is required to be less than 1.0E-04. In view of variations in measurement, it is desirable that EER be less than 5.0E-04 for the detection system that utilizes the address continuity and less than 5.0E-05 for the detection system that does not utilize the address continuity.

A more straightforward method to estimate the error rate is to make use of $\mu/\sigma$.

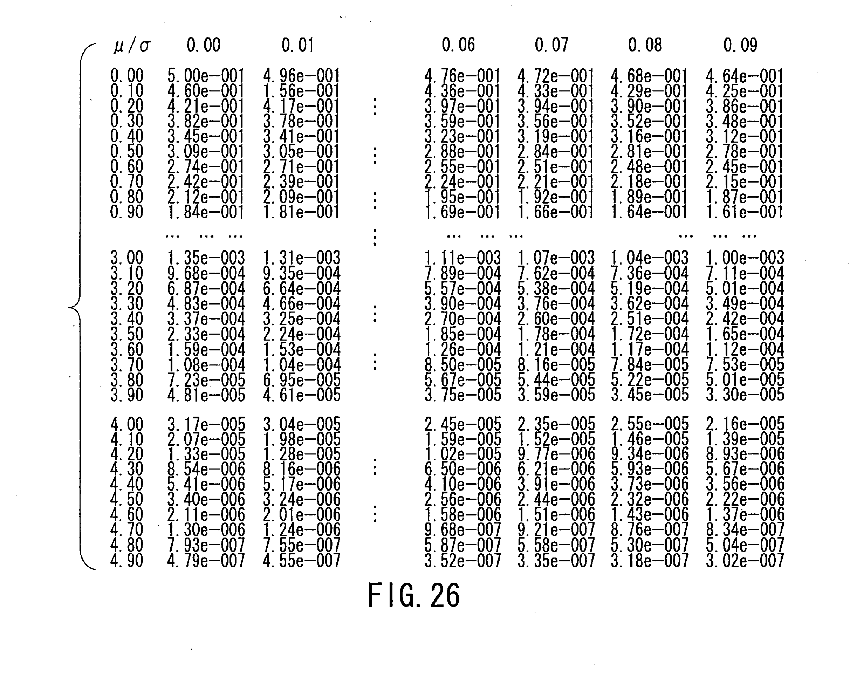

FIG. 26 shows a table of correlation between $\mu/\sigma$ and detection error rate. The use of this table allows the detection error rate to be measured from the values of $\mu/\sigma$. From this table it is desirable that the values of $\mu/\sigma$ be more than 3.0.

[Explanation of Phase-Modulated Wobble Signal Evaluation Method: (4) Measurement of Address Detection Error Rate in Integrating Detection]

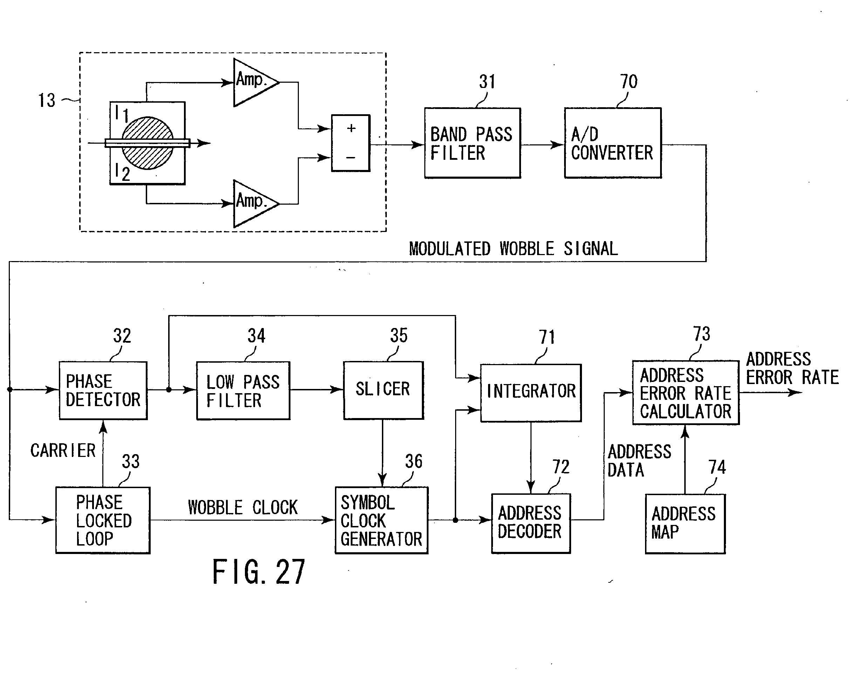

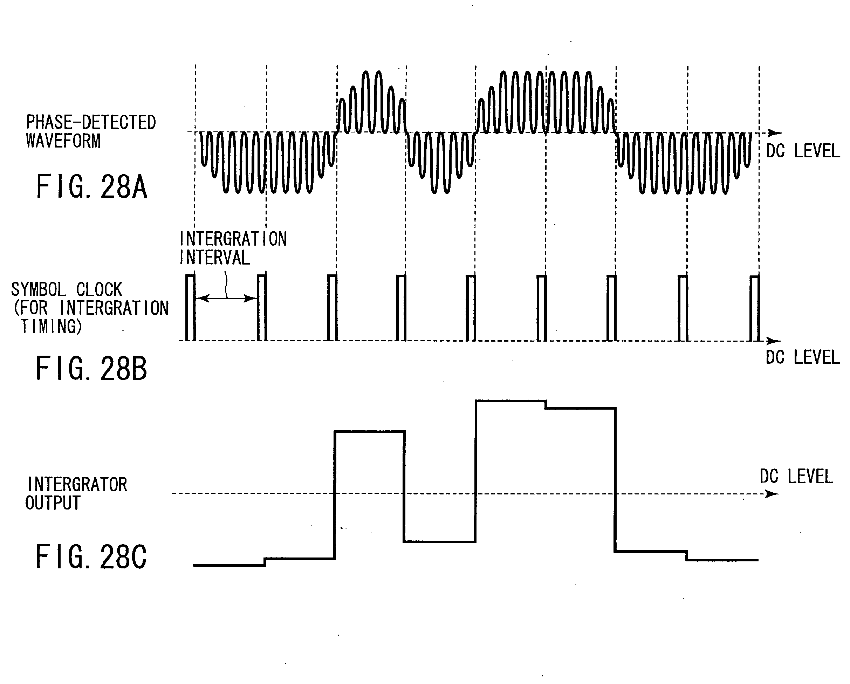

FIG. 27 illustrates an address detection method using an integrator 71 and its associated error rate measurement method. In FIG. 27, each of the corresponding components to those in the demodulation circuit shown in FIG. 11 is denoted by a like reference numeral. The output of the phase detector 32, after being subjected to low-pass filtering and slicing, is input to the symbol clock generator 71 to generate the symbol clock. The phase detector output is also applied to the integrator 71 that can be reset. The symbol clock is also applied to the integrator 71. The integrator 71 integrates and outputs the input phase detector output waveform at regular intervals separated by the symbol clock period. This operation is illustrated in FIG. 28. On the output side of the integrator 71 is placed a register that holds an integration value at the time when each symbol clock pulse is input. The value in the register is updated with each symbol clock pulse. The calculated value at the time of integration processing is reset upon entry of the symbol clock. The waveform thus obtained is input to the address decoder 72 together with the symbol clock, whereby addresses are decoded. The address data obtained by the address decoder 72 is applied to the succeeding address error rate calculator 73, which performs synchronization processing on the address map from the previously prepared memory 74 and the input address data to calculate the address error rate. To ensure the reliability at the time when this detection system is used, it is desirable that the address error rate be less than 1E-3, as in the foregoing case.

[Explanation of Phase-Modulated Wobble Signal Evaluation Method: (5) Measurement of Estimated Error Rate in Integrating Detection]

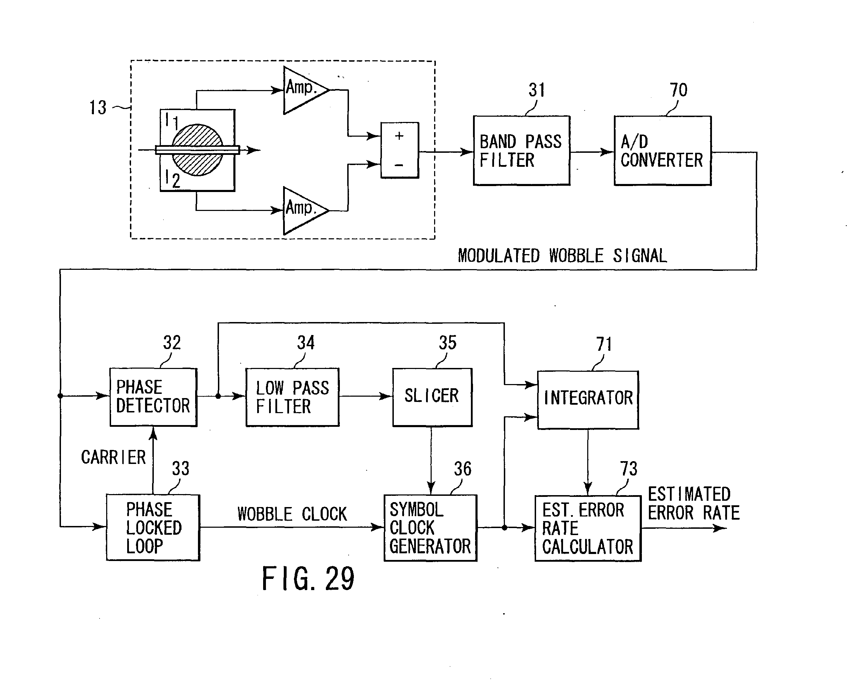

FIG. 29 illustrates an estimated error rate measurement method in address detection using the integrator. The output of the integrator 71 and the symbol clock are input to an estimated error rate calculator 81. In the calculator, amplitude values are sampled from the integrated waveform using the symbol clock. The method of calculating the estimated error rate using the amplitude values remains unchanged from the foregoing method. To ensure the reliability at the time when this detection system is used, it is desirable that the estimated error rate be less than 1E-3, as in the foregoing case. In addition, it is desirable that the values of $\mu/\sigma$ be more than 3.0.

The invention thus far described is summarized as follows:

(1) A method is provided which is used with an optical disc on which physical address information is recorded through phase modulation of groove wobble and evaluates the reliability of address information using the phase detected waveform of the wobble signal. The advantage of this method (1) is that the use of the phase detected waveform allows an evaluation value that is correlated to an address detection error rate to be obtained easily.

(2) A method is provided which, in the evaluation method of (1), evaluates the reliability using the standard deviation $\sigma$ of a jitter distribution obtained from the low-pass filter output of the phase detected waveform and the period T of the symbol clock for modulation. The advantage of this method (2) is that the use of the standard deviation of the jitter distribution and the symbol clock period allows an evaluation value that is correlated to an address detection error rate to be obtained easily.

(3) Optical discs can be selected or discriminated on the basis of evaluation values correlated to address detection error rates and easy to measure by using the standard deviation of the jitter distribution and the symbol clock period in the evaluation method (2).

(4) Optical disks are selected or discriminated so that $\sigma/T$ calculated from the standard deviation $\sigma$ and the symbol clock period T is less than 12% in the evaluation method (2). The advantage is that optical discs can be selected or discriminated on the basis of evaluation values correlated to address detection error rates and easy to measure by using $\sigma/T$.

(5) A method is provided which evaluates the reliability of address information on the basis of the standard deviation $\sigma$ and the mean $\mu$ of a distribution of absolute amplitude values obtained from the low-pass filter output of the phase detected waveform in the evaluation method (1). The advantage of the method (5) is that the use of the standard deviation and the mean of the distribution of the absolute amplitude values allows an evaluation value that is correlated to an address detection error rate to be obtained easily.

(6) Optical discs can be selected or discriminated on the basis of evaluation values correlated to address detection error rates and easy to measure by using the standard deviation and the means of the distribution of absolute amplitude values in the evaluation method (5).

(7) Optical disks can be selected or discriminated so that the estimated error rate calculated from the standard deviation $\sigma$ and the mean $\mu$ is less than 1E-3 in the evaluation method (5).

**Claims**

1.  A recorded information evaluation method **characterized by** comprising the steps of:

    optically obtaining, from an optical disc on which physical address information is recorded in the form of phase modulation of a groove wobble, a wobble signal that is affected by the groove wobble;
    phase-detecting the wobble signal;
    feeding the phase-detected waveform obtained by the phase detection into a low-pass filter; and
    deciding the value of $\sigma/T$ calculated from the standard deviation $\sigma$ of a jitter distribution obtained from the output of the low-pass filter and the period T of a symbol clock for the phase modulation to thereby evaluate the reliability of the recorded physical address information.

2.  The recorded information evaluation method according to claim 1, **characterized in that** the criterion of evaluation is set such that $\sigma/T$ is less than 12%.

3.  A recorded information evaluation method **characterized by** comprising the steps of:

    optically obtaining, from an optical disc on which physical address information is recorded in the form of phase modulation of a groove wobble, a wobble signal that is affected by the groove wobble;
    phase-detecting the wobble signal;
    feeding the phase-detected waveform obtained by the phase detection into a low-pass filter; and
    deciding an estimated error rate calculated from the standard deviation $\sigma$ and the mean $\mu$ of a distribution of amplitude absolute values obtained from the output of the low-pass filter to thereby evaluate the reliability of the recorded physical address information.

4.  The recorded information evaluation method according to claim 3, **characterized in that** the criterion of evaluation is set such that the estimated error rate is less than 1E-3.

5.  A recorded information evaluation device **characterized by** comprising:

means for optically obtaining, from an optical disc on which physical address information is recorded in the form of phase modulation of a groove wobble, a wobble signal that is affected by the groove wobble;
means for phase-detecting the wobble signal;
means for low-pass filtering the phase-detected waveform output from the means of phase-detecting; and
means for calculating and deciding the value of $\sigma/T$ calculated from the standard deviation $\sigma$ of a jitter distribution obtained from the output of the means of low-pass filtering and the period $T$ of a symbol clock for the phase modulation to thereby evaluate the reliability of the recorded physical address information.

6. A recorded information evaluation device **characterized by** comprising:

means for optically obtaining, from an optical disc on which physical address information is recorded in the form of phase modulation of a groove wobble, a wobble signal that is affected by the groove wobble;
means for phase-detecting the wobble signal;
means for low-pass filtering the phase-detected waveform output from the means of phase-detecting; and
means for calculating and deciding an estimated error rate calculated from the standard deviation $\sigma$ and the mean $\mu$ of a distribution of amplitude absolute values obtained from the output of the means of low-pass filtering to thereby evaluate the reliability of the recorded physical address information.

7. An optical disc on which physical address information is recorded in the form of phase modulation of a groove wobble and in which, by optically obtaining, from the optical disc, a wobble signal that is affected by the groove wobble, phase-detecting the wobble signal, and feeding the phase-detected waveform obtained by the phase detection into a low-pass filter, the value of $\sigma/T$ calculated from the standard deviation $\sigma$ of a jitter distribution obtained from the output of the low-pass filter and the period $T$ of a symbol clock for the phase modulation is less than 12%.

8. An optical disc on which physical address information is recorded in the form of phase modulation of a groove wobble and in which, by optically obtaining, from the optical disc, a wobble signal that is affected by the groove wobble, phase-detecting the wobble signal, and feeding the phase-detected waveform obtained by the phase detection into a low-pass filter, an estimated error rate calculated from the standard deviation $\sigma$ and the means $\mu$ of a distribution of amplitude absolute values obtained from the output of the low-pass filter is less than 1E-3.

FIG. 1

FIG. 2

CLAMP HOLE

DATA RECORDING AREA

TRACK

ENLARGED

FIG. 3

LAND AND GROOVE
RECORDING

FIG. 4A

GROOVE-ONLY
RECORDING

FIG. 4B

WOBBLE TRACK AMPLITUDE

WOBBLE TRACK

GROOVE TRACK

BEAM SPOT

LAND TRACK

GROOVE TRACK

LAND TRACK

FIG. 5

SUM SIGNAL

SCANNING TIME

FIG. 6A

DIFFERENCE SIGNAL

RADIAL PUSH-PULL

SCANNING TIME

FIG. 6B

FREQUENCY MODULATION

| FIRST FREQUENCY | SECOND FREQUENCY | FIRST FREQUENCY | SECOND FREQUENCY |

FIG. 7

PHASE MODULATION

| FIRST PHASE | SECOND PHASE | FIRST PHASE | SECOND PHASE |

FIG. 8

(M+1)st TRACK

M-th TRACK

(N+1)st SEGMENT

(M-1)st TRACK

N-th SEGMENT

(N-1)st SEGMENT

FIG. 9

SEGMENT

| SYNC | SEGMENT NUMBER | TRACK NUMBER | OTHER INFORMATION |
|------|----------------|--------------|-------------------|

ADDRESS INFORMATION

FIG. 10

FIG. 11

FIRST PHASE    SECOND PHASE

PHASE-MODULATED
WOBBLE SIGNAL

FIG. 12A

AFTER BANDPASS
FILTERING

FIG. 12B

CARRIER

FIG. 12C

AFTER PHASE
DETECTION

FIG. 12D

DC LEVEL

DC LEVEL

DC LEVEL

DC LEVEL

EP 1 463 041 A2

AFTER PHASE
DETECTION
⇒ DC LEVEL

FIG. 13A

AFTER LOWPASS
FILTERING
⇒ DC LEVEL

FIG. 13B

TWO-VALUED
SIGNAL
⇒ DC LEVEL

FIG. 13C

EDGE SIGNAL
⇒ DC LEVEL

FIG. 13D

EP 1 463 041 A2

FIG. 14

EP 1 463 041 A2

FIG. 15

LOWPASS FILTERED
WAVEFORM WITH
NO NOISE
    DC LEVEL

FIG. 16A

LOWPASS FILTERED
WAVEFORM WITH
NOISE
    DC LEVEL

FIG. 16B

EDGE SIGNALS IN
THE ABSENCE OF
NOISE
    DC LEVEL

FIG. 16C

EDGE SIGNALS IN
THE PRESENCE OF
NOISE
    DC LEVEL

FIG. 16D

EP 1 463 041 A2

EDGE SIGNALS IN THE ABSENCE OF NOISE

FIG. 17A

EDGE SIGNALS IN THE PRESENCE OF NOISE

FIG. 17B

SYMBOL CLOCK

FIG. 17C

EP 1 463 041 A2

COUNT

DISTRIBUTION OF
ΔT IN THE ABSENCE
OF NOISE

FIG. 18A

T/2

TIME

COUNT

σ

DISTRIBUTION OF
ΔT IN THE PRESENCE
OF NOISE

FIG. 18B

T/2

T

TIME

COUNT

σ

DISTRIBUTION OF
ΔT IN THE PRESENCE
OF SYNC SIGNAL
DIFFERENT IN
MODULATION PERIOD
FROM ADDRESS BITS

FIG. 20

T/2

T

TIME

DISTRIBUTION
OF ΔT IN SYNC
SIGNAL PART

DISTRIBUTION
OF ΔT IN
ADDRESS PART

22

EP 1 463 041 A2

FIG. 19

JITTER VS ADDRESS DETECTION ERROR RATE

FIG. 21

FIG. 22

LOWPASS FILTERED
WAVEFORM WITH
NO NOISE

A

DC LEVEL

FIG. 23A

LOWPASS FILTERED
WAVEFORM WITH
NOISE

DC LEVEL

FIG. 23B

SYMBOL CLOCK

DC LEVEL

FIG. 23C

EP 1 463 041 A2

DISTIBUTION OF
AMPLITUDES IN
THE ABSENCE OF
NOISE

**FIG. 24A**

DISTIBUTION OF
AMPLITUDES IN
THE PRESENCE
OF NOISE

**FIG. 24B**

DISTIBUTION OF
AMPLITUDES IN
THE PRESENCE
OF NOISE

**FIG. 25A**

DISTIBUTION OF
ABSOLUTE-VALUE
AMPLITUDES IN
THE PRESENCE OF
NOISE

**FIG. 25B**

| $\mu/\sigma$ | 0.00 | 0.01 | | 0.06 | 0.07 | 0.08 | 0.09 |
|---|---|---|---|---|---|---|---|
| 0.00 | 5.00e−001 | 4.96e−001 | | 4.76e−001 | 4.72e−001 | 4.68e−001 | 4.64e−001 |
| 0.10 | 4.60e−001 | 1.56e−001 | | 4.36e−001 | 4.33e−001 | 4.29e−001 | 4.25e−001 |
| 0.20 | 4.21e−001 | 4.17e−001 | ⋮ | 3.97e−001 | 3.94e−001 | 3.90e−001 | 3.86e−001 |
| 0.30 | 3.82e−001 | 3.78e−001 | | 3.59e−001 | 3.56e−001 | 3.52e−001 | 3.48e−001 |
| 0.40 | 3.45e−001 | 3.41e−001 | | 3.23e−001 | 3.19e−001 | 3.16e−001 | 3.12e−001 |
| 0.50 | 3.09e−001 | 3.05e−001 | ⋮ | 2.88e−001 | 2.84e−001 | 2.81e−001 | 2.78e−001 |
| 0.60 | 2.74e−001 | 2.71e−001 | | 2.55e−001 | 2.51e−001 | 2.48e−001 | 2.45e−001 |
| 0.70 | 2.42e−001 | 2.39e−001 | | 2.24e−001 | 2.21e−001 | 2.18e−001 | 2.15e−001 |
| 0.80 | 2.12e−001 | 2.09e−001 | ⋮ | 1.95e−001 | 1.92e−001 | 1.89e−001 | 1.87e−001 |
| 0.90 | 1.84e−001 | 1.81e−001 | | 1.69e−001 | 1.66e−001 | 1.64e−001 | 1.61e−001 |
| ... | ... | ... | ⋮ | ... | ... | ... | ... |
| 3.00 | 1.35e−003 | 1.31e−003 | | 1.11e−003 | 1.07e−003 | 1.04e−003 | 1.00e−003 |
| 3.10 | 9.68e−004 | 9.35e−004 | | 7.89e−004 | 7.62e−004 | 7.36e−004 | 7.11e−004 |
| 3.20 | 6.87e−004 | 6.64e−004 | | 5.57e−004 | 5.38e−004 | 5.19e−004 | 5.01e−004 |
| 3.30 | 4.83e−004 | 4.66e−004 | ⋮ | 3.90e−004 | 3.76e−004 | 3.62e−004 | 3.49e−004 |
| 3.40 | 3.37e−004 | 3.25e−004 | | 2.70e−004 | 2.60e−004 | 2.51e−004 | 2.42e−004 |
| 3.50 | 2.33e−004 | 2.24e−004 | | 1.85e−004 | 1.78e−004 | 1.72e−004 | 1.65e−004 |
| 3.60 | 1.59e−004 | 1.53e−004 | | 1.26e−004 | 1.21e−004 | 1.17e−004 | 1.12e−004 |
| 3.70 | 1.08e−004 | 1.04e−004 | ⋮ | 8.50e−005 | 8.16e−005 | 7.84e−005 | 7.53e−005 |
| 3.80 | 7.23e−005 | 6.95e−005 | | 5.67e−005 | 5.44e−005 | 5.22e−005 | 5.01e−005 |
| 3.90 | 4.81e−005 | 4.61e−005 | | 3.75e−005 | 3.59e−005 | 3.45e−005 | 3.30e−005 |
| 4.00 | 3.17e−005 | 3.04e−005 | | 2.45e−005 | 2.35e−005 | 2.55e−005 | 2.16e−005 |
| 4.10 | 2.07e−005 | 1.98e−005 | | 1.59e−005 | 1.52e−005 | 1.46e−005 | 1.39e−005 |
| 4.20 | 1.33e−005 | 1.28e−005 | | 1.02e−005 | 9.77e−006 | 9.34e−006 | 8.93e−006 |
| 4.30 | 8.54e−006 | 8.16e−006 | ⋮ | 6.50e−006 | 6.21e−006 | 5.93e−006 | 5.67e−006 |
| 4.40 | 5.41e−006 | 5.17e−006 | | 4.10e−006 | 3.91e−006 | 3.73e−006 | 3.56e−006 |
| 4.50 | 3.40e−006 | 3.24e−006 | | 2.56e−006 | 2.44e−006 | 2.32e−006 | 2.22e−006 |
| 4.60 | 2.11e−006 | 2.01e−006 | ⋮ | 1.58e−006 | 1.51e−006 | 1.43e−006 | 1.37e−006 |
| 4.70 | 1.30e−006 | 1.24e−006 | | 9.68e−007 | 9.21e−007 | 8.76e−007 | 8.34e−007 |
| 4.80 | 7.93e−007 | 7.55e−007 | | 5.87e−007 | 5.58e−007 | 5.30e−007 | 5.04e−007 |
| 4.90 | 4.79e−007 | 4.55e−007 | | 3.52e−007 | 3.35e−007 | 3.18e−007 | 3.02e−007 |

FIG. 26

EP 1 463 041 A2

FIG. 27

PHASE-DETECTED
WAVEFORM

FIG. 28A

INTERGRATION
INTERVAL

SYMBOL CLOCK
(FOR INTERGRATION
TIMING)

FIG. 28B

INTERGRATOR
OUTPUT

FIG. 28C

DC LEVEL

DC LEVEL

DC LEVEL

EP 1 463 041 A2

FIG. 29